Europäisches Patentamt

European Patent Office

Office européen des brevets

(11) Veröffentlichungsnummer: **0 315 941**

**A2**

## (12) EUROPÄISCHE PATENTANMELDUNG

(21) Anmeldenummer: 88118551.6

(22) Anmeldetag: 08.11.88

(51) Int. Cl.⁴: **F16J 15/34 , F04D 29/10**

(30) Priorität: 10.11.87 DE 3738081

(43) Veröffentlichungstag der Anmeldung:
17.05.89 Patentblatt 89/20

(84) Benannte Vertragsstaaten:
**AT BE CH DE FR GB IT LI NL**

(71) Anmelder: **RHEINHÜTTE vorm. Ludwig Beck GmbH & Co.**
**Rheingaustrasse 96-100 Postfach 129163**
**D-6200 Wiesbaden-Biebrich(DE)**

(72) Erfinder: **Auchter, Bruno, Dipl.-Ing.**
**Fontanestrasse 23**
**D-6500 Mainz 31(DE)**
Erfinder: **Wagner, Karl-Heinz**
**Klosterstrasse 22**
**D-6228 Eltville 5(DE)**

(74) Vertreter: **Mey, Klaus-Peter, Dr.-Ing.**
**Dipl.-Wirt.-Ing. et al**
**Patentanwälte**
**HEMMERICH-MÜLLER-GROSSE-POLLMEIER--**
**MEY Aachener Strasse 712**
**D-5020 Frechen 4(DE)**

(54) **Verbindung für Werkstoffe unterschiedlicher Wärmeausdehnung.**

(57) Die Erfindung bezieht sich auf eine Verbindung von Werkstoffen unterschiedlicher Wärmeausdehnung, insbesondere von sich um eine gemeinsame Achse (3) drehenden und konzentrisch angeordneten Maschinenteilen (1, 4). Die Verbindung soll eine sichere Momentenübertragung gewährleisten und die unterschiedlichen Wärmeausdehnungen der zu verbindenden Werkstoffe berücksichtigen unter Vermeidung eines Bruchs bei Keramikbauteilen. Als Lösung ist vorgesehen, daß in einem Zwischenraum (14) zwischen beiden Werkstoffteilen (1, 4) eine elastisches Verbindungsglied (15) angeordnet ist, das eine kraft- und formschlüssige Verbindung zwischen den Werkstoffteilen (1, 4) herstellt und wobei die Passungen so dimensioniert sind, daß auch bei Erwärmung keine direkte Berührung zwischen den Teilen (1, 4) gegebenen ist. Vorzugsweise ist der Zwischenraum (14) spiralförmig um die Drehachse ausgebildet, wobei zweckmäßigerweise die Werkstoffteile (1, 4) mit Halbrundgewinden (12, 13) versehen sind, die gemeinsam den Zwischenraum (14) bilden, in dem als Verbindungsglied eine Spiralfeder (15) angeordnet ist. Die Spiralfeder (15) kann aus spiralförmig gewickeltem Flachmaterial bestehen, vorzugsweise aus dem Mantel eines handelsüblichen, von der Hülle befreiten Bowdenzuges.

FIG. 1

## Verbindung für Werkstoffe unterschiedlicher Wärmeausdehnung

Die Erfindung bezieht sich auf eine Verbindung von Werkstoffen unterschiedlicher Wärmeausdehnung, insbesondere von sich um eine gemeinsame Achse drehenden und konzentrisch angeordneten Maschinenteilen.

Typische Werkstoffe mit geringer Wärmeausdehnung sind keramische Materialien, beispielsweise Silicumcarbid, das besonders extremen Anforderungen hinsichtlich der Temperatur-, Verschleiß- und Korrosionseigenschaften ausgesetzt werden kann und wegen dieser Vorteile zunehmend Verwendung findet. Die Erfahrung hat gezeigt, daß keramische Bauteile besondere Probleme insbesondere bei einer Verbindung mit anderen Werkstoffen mit anderen Werkstoffeigenschaften bereiten. Obwohl in vielen technischen Bereichen bereits befriedigende Lösungen gefunden wurden, bleiben für spezielle Anwendungsfälle, insbesondere bei der konstruktiven Verbindung von sich drehenden Maschinenteilen die bekannten Lösungen unbefriedigend.

Aus der DE-OS 3428744 ist für Gleitringdichtungen oder Wellenschutzhülsen eine Befestigung von ringförmigen Siliciumcarbid-Bauteilen an Metallträgerteilen bekannt, wobei zwischen dem Metallträgerteil mindestens ein elastisches Lagerglied angeordnet ist, das vorzugsweise aus hochtemperaturbeständigem Graphit oder aus wellenförmigen Metallringen besteht. Auf diese Weise wird nur eine kraftschlüssige Verbindung hergestellt, eine formschlüssige Verbindung zur sicheren Übertragung hoher Drehmomente ist nicht vorgesehen.

Es ist daher Aufgabe der Erfindung, eine Verbindung vorzustellen, mittels derer die genannten Nachteile vermieden und die Schwierigkeiten ausgeräumt werden können. Insbesondere soll die Verbindung eine sichere Momentenübertragung gewährleisten und die unterschiedlichen Wärmeausdehnungen der zu verbindenden Werkstoffe berücksichtigen unter Vermeidung eines Bruchs der Keramikbauteile. Die Verbindung soll gleichzeitig auch leicht und kostengünsitig herstellbar und bearbeitbar sein.

Die Lösung der gestellten Aufgabe gelingt erfindungsgemäß dadurch, daß in einem Zwischenraum zwischen beiden Werkstoffteilen ein elastisches Verbindungsglied angeordnet ist, das eine kraft- und formschlüssige Verbindung zwischen der Werkstoffteilen herstellt und wobei die Passungen so dimensioniert sind, daß auch bei Erwärmung keine direkte Berührung zwischen den Teilen gegeben ist. Da eine direkte Berührung zwischen den Werkstoffen unterschiedlicher Wärmedehnung vermieden wird, ist auch eine besonders hohe Paßgenauigkeit nicht erforderlich, d.h. es sind hohe Toleranzen zulässig. Die Bearbeitungskosten können auf diese Weise erheblich gesenkt werden, da ansonsten die Bearbeitung von Siliciumcarbid sehr kostenintensiv nur mit Diamantwerkzeugen möglich ist. Als Verbindungsglieder können beliebige duktile Werkstoffe im Hinblick auf die gewünschte Momentenübertragung verwendet werden.

Als vorteilhafte Ausgestaltung der Erfindung ist der Zwischenraum spiralförmig um die Drehachse ausgebildet. Mit dieser Maßnahme wird ein besonders vereinfachtes Einbringen des elastischen Verbindungselementes in den dafür vorgesehenen Zwischenraum ermöglicht.

In einer weiteren Ausgestaltung der Erfindung sind die Werkstoffteile mit Halbrundgewinden versehen, die gemeinsam den Zwischenraum bilden, in dem das Verbindungslied angeordnet ist. Auf diese Weise werden vorteilhaft die Flächenpressungen in den einzelnen Gewindegängen kleingehalten bzw. vergleichmäßigt.

Besonders vorteilhaft ist nach der Erfindung vorgesehen, daß als Verbindungsglied im Zwischenraum eine Spiralfeder angeordnet ist, die vorzugsweise aus spiralförmig gewickeltem Flachmaterial besteht und welche mit ihrem Durchmesser den durch die beiden Rundgewindegänge verbleibenden kreisförmigen Querschnitt ausfüllt. Auf diese Weise wird eine Verbindung zwischen Werkstoffteilen geschaffen, die über den gesamten Bereich der Feder form- und kraftschlüssig wirkt. Die bei Erwärmung entstehende Dehnung der Feder wirkt sich nicht in vollem Umfang in einer Erhöhung der Vorspannung auf die Nabe bzw. Welle aus, sondern führt zu einer Längung der Feder bei in etwa gleichbleibenden Flächenpressungen in den Gewindegängen. Es tritt ferner eine hohe Rückwärtshemmung ein, d. h. das Drehmoment zu Lösen der Verbindung ist höher als das aufzubringende Verbindungsmoment.

Zweckmäßigerweise wird als Spiralfeder der Mantel eines handelsüblichen Bowdenzuges verwendet. Hierbei handelt es sich um eine besonders kostengünstige Maßnahme, wobei lediglich die üblicherweise vorhandene Kunststoffhülle entfernt werden muß.

Ferner ist nach der Erfindung mit Vorteil vorgesehen, daß die Spiralfeder durch Verwendung eines Klebers im Zwischenraum fixiert ist. Auf diese Weise wird verhindert, daß die Spiralfeder ihre Lage verändert, wobei genügend Freiraum zur thermischen Ausdehnung des Klebers zur Verfügung gestellt wird, so daß keine thermischen Spannungen auf das Siliciumcarbid ausgeübt werden.

Bei der Erfindung kann das Verbindungsstück des Werkstoffteils mit der größeren Wärmedehnung innen und das Verbindungsstück des Werkstoffteils mit der geringeren Wärmedehnung außen angeordnet sein.

Alternativ kann das Verbindungsstück des Werkstoffteils mit der größeren Wärmedehnung aber auch außen und das Verbindungsstück des Werkstoffteils mit der geringeren Wärmedehnung innen angeordnet sein.

Nach einer besonders bevorzugten Ausführungsform wird die erfindungsgemäße Verbindung zwischen einem Pumpenlaufrad aus Siliciumcarbid und einer Antriebswelle aus Metall eingesetzt. Bei diesem speziellen, aber nur beispielhaften Anwendungsfall wurde eine besonders hohe Betriebssicherheit und Laufruhe festgestellt.

Weitere Einzelheiten, Merkmale und Vorteile der Erfindung ergeben sich aus der nachstehenden Erläuterung mehrerer in den Zeichnungen schematisch dargestellter Ausführungsbeispiele.

Es zeigen:

Fig. 1 eine erfindungsgemäße Gewindebefestigung eines Pumpenlaufrades mit einer Antriebswelle, ausschnittweise, schematisch in geschnittener Seitenansicht,

Fig. 2 Aufnahmebohrung eines Pumpenlaufrades im Teilschnitt mit Gewinderillen zur Aufnahme einer Spiralfeder,

Fig. 3 Antriebswelle bzw. Gewindebuchse in Seitenansicht mit Gewinderillen,

Fig. 4 eine erfindungsgemäße Verbindung zwischen Antriebswelle und innenliegendem Zapfen eines Pumpenlaufrades in vergrößertem, schematischen Teilschnitt.

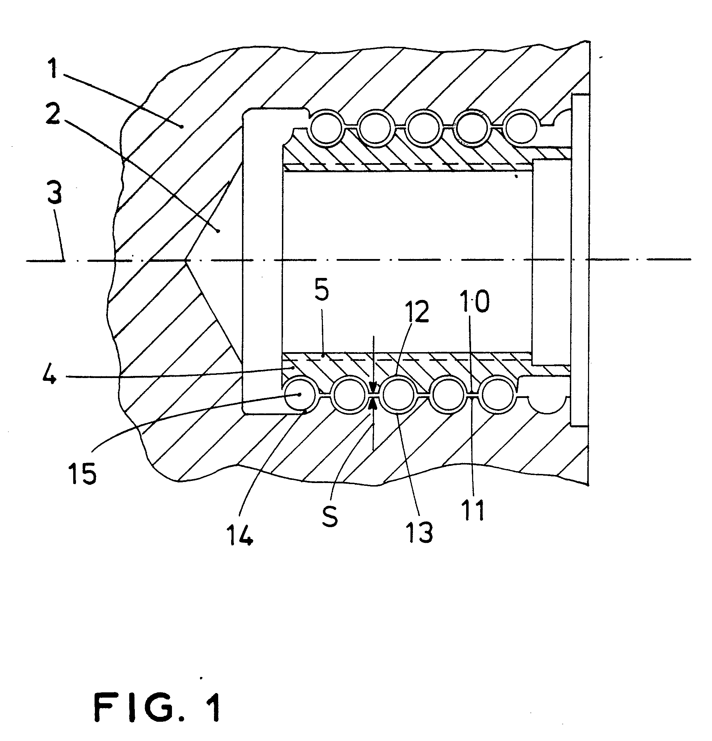

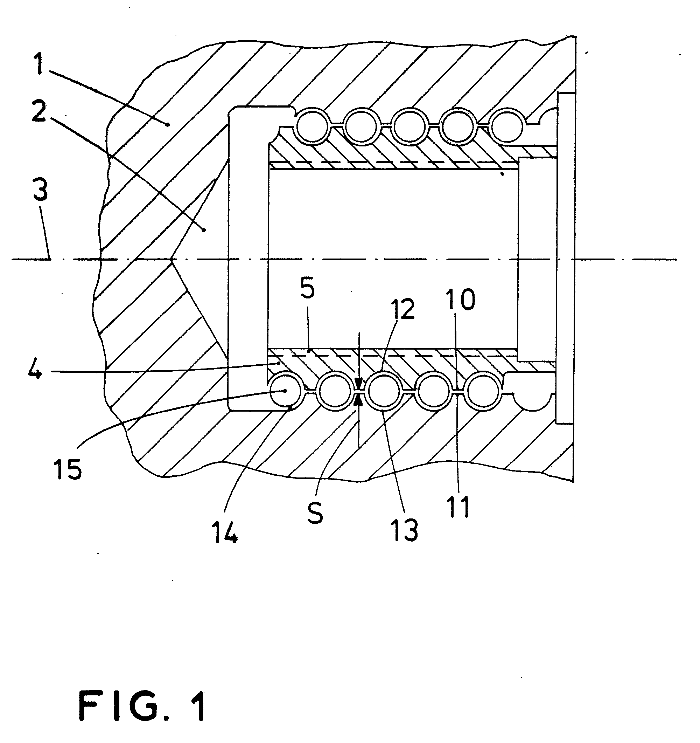

Figure 1 zeigt eine erfindungsgemäße Verbindung zwischen einem Werkstoff (1) mit einer geringen Wärmedehnung, beispielsweise einem Pumpenlaufrad aus Siliciumcarbid, das eine Aufnahmebohrung (2) zum Anschluß einer Antriebswelle aus Stahl (nicht dargestellt) besitzt. Laufrad (1) und Antriebswelle rotieren um die gemeinsame Drehachse (3). Auf der nicht gezeigten Antriebswelle sitzt eine ebenfalls metallische Gewindebuchse (4), die mit dieser über ein Gewinde (5) verbindbar ist. Zwischen dem Außenmantel (10) der Gewindebuchse (4) und dem Innenmantel (11) des Laufrades (1) besteht ein Spalt (S), der so bemessen ist, daß bei maximaler Ausdehnung der beiden verbundenen Werkstoffe (1, 4) keine direkte Berührung der unterschiedlichen Materialien zustande kommt. Sowohl der Grundkörper des Pumpenlaufrades (1) als auch die Gewindebuchse (4) sind mit Gewinde bzw. Gewinderillen (12, 13) versehen, die zwischen sich den Zwischenraum (14) bilden, in dem sich eine Spiralfeder (15) befindet. Die Spiralfeder (15) kann durch Verwendung eines geeigneten Klebers im Zwischenraum (14) fixiert sein, um auf diese Weise eine Bewegung der Spiralfeder (15) bzw. ein unbeabsichtigtes Lösen der Verbindung zu verhindern.

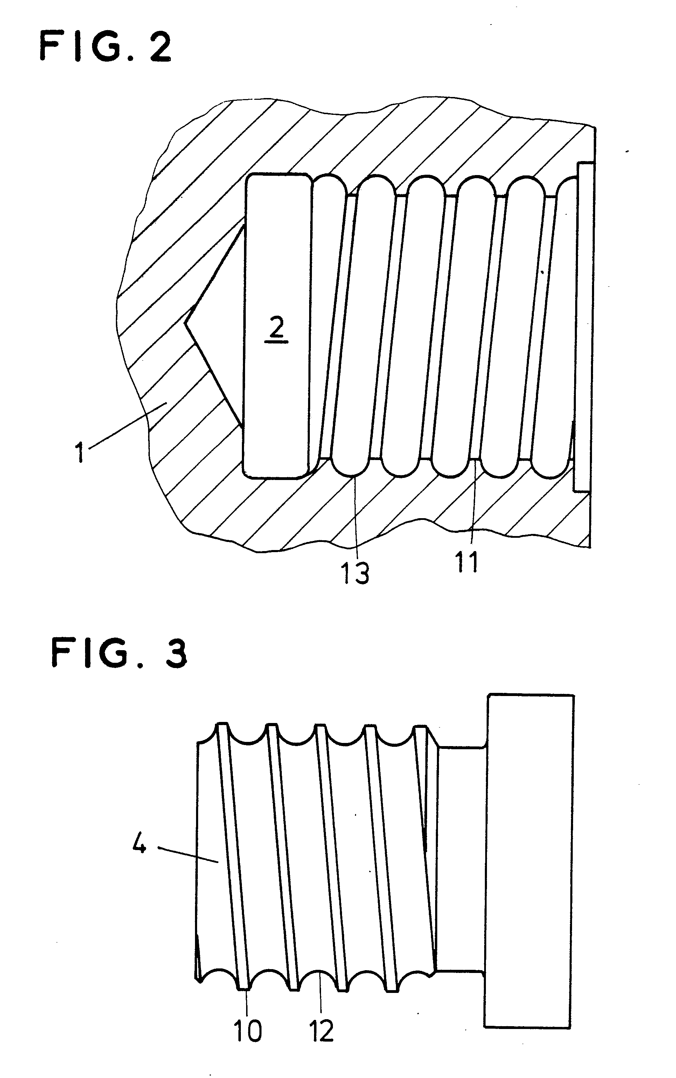

Figure 2 zeigt ausschnittweise das Pumpenlaufrad (1) mit Innenmantel (11) und Gewinderillen (13), wobei die Montage bzw. die erfindungsgemäße Verbindung in der Weise erfolgt, daß in die Wellenanschlußöffnung bzw. Aufnahmebohrung (2) in die Rillen (13) die Spiralfeder (vgl. Fig. 1, Ziffer 15) eingelegt und anschließend der in Figure 3 gezeigte Wellenanschlußkörper (4) eingedreht wird, dessen Halbrundgewinde (12) formmäßig an die Spiralfeder angepaßt sind und wobei die Außenmantelflächen (10) die Innenmantelflächen der Aufnahmebohrung des Laufrades nicht berühren.

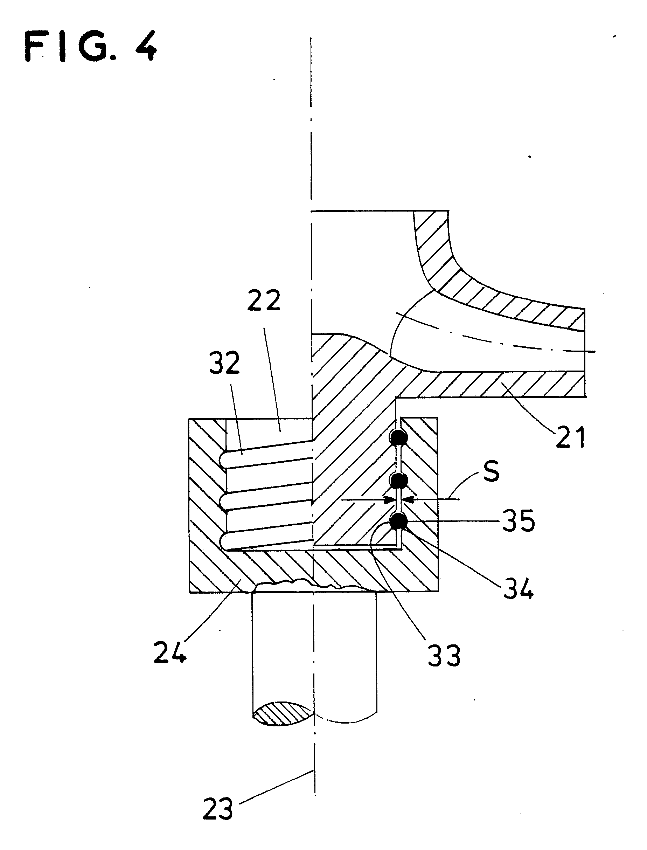

Figure 4 zeigt eine alternative Ausgestaltung der erfindungsgemäßen Verbindung zwischen dem Verbindungszapfen eines Pumpenlaufrades (21) aus Siliciumcarbid und der Lagerbuchse einer Antriebswelle (24), in deren Aufnahmebohrung (22) das Verbindungsstück des Laufrades zu liegen kommt. Laufrad (21) und Antriebswelle (24) rotieren un die gemeinsame Drehachse (23). Zwischen dem Innenmantel der Lagerbuchse der Antriebswelle (24) und dem Außenmantel des Verbindungszapfens des Laufrades (21) besteht wiederum der Spalt (S), der so bemessen ist, daß bei maximaler Ausdehnung der beiden verbundenen Werkstoffe (21, 24) keine direkte Berührung der unterschiedlichen Materialien zustande kommt. Sowohl der Grundkörper des Pumpenlaufrades (21) als auch die Lagerbuchse (24) sind mit Gewinde bzw. Gewinderillen (32, 33) versehen, die zwischen sich den Zwischenraum (34) bilden, in dem sich nach der Erfindung die Spiralfeder (35) befindet.

Die erfindungsgemäßen Maßnahmen sind nicht auf das in den Zeichnungsfiguren dargestellte Ausführungsbeispiel beschränkt. So können beispielsweise, ohne den Rahmen der Erfindung zu verlassen, beliebige Werkstoffe mit unterschiedlicher Wärmeausdehnung, beispielsweise auch Werkzeug-, besondere Schnellarbeitsstähle oder Hartmetalle (Widia) mit anderen Qualitäten verbunden werden. Die Zwischenräume zur Aufnahme der Verbindungsglieder können ferner eine beliebige Form haben und in beliebiger Weise hergestellt werden, beispielsweise können diese bereits bei der Formgebung Berücksichtigung finden oder später mittels verschiedenster bekannter Verfahren gebildet werden. Es können alle bekannten Gewindearten nach Zweckmäßigkeitsgesichtspunkten gegebenenfalls mit formmäßig angepaßten Verbindungsgliedern hergestellt werden. Die jeweilige konstruktive Ausgestaltung ist in Anpassung an die spätere Verwendung der Verbindung dem Fachmann anheimgestellt.

**Ansprüche**

1. Verbindung von Werkstoffen unterschiedlicher Wärmeausdehnung, insbesondere von sich um eine gemeinsame Achse drehenden und konzentrisch angeordneten Maschinenteilen, dadurch gekennzeichnet, daß in einem Zwischenraum (14; 34) zwischen beiden Werkstoffteilen (1, 4; 21, 24) ein elastisches Verbindungsglied (15; 35) angeordnet ist, das eine kraft- und formschlüssige Verbindung zwischen den Werkstoffteilen (1, 4; 21, 24) herstellt und wobei die Passungen so dimensioniert sind, daß auch bei Erwärmung keine direkte Berührung zwischen den Teilen (1, 4; 21, 24) gegeben ist.

2. Verbindung nach Anspruch 1, dadurch gekennzeichnet, daß der Zwischenraum (14; 34) spiralförmig um die Drehachse (3; 23) ausgebildet ist.

3. Verbindung nach Anspruch 1 oder 2, dadurch gekennzeichnet, daß die Werkstoffteile (1, 4; 21, 24) mit Halbrundgewinden (12, 13; 32, 33) versehen sind, die gemeinsam den Zwischenraum (14; 34) bilden, in dem das Verbindungsglied (15; 35) angeordnet ist.

4. Verbindung nach einem oder mehreren der Ansprüche 1 bis 3, dadurch gekennzeichnet, daß als Verbindungslied (15; 35) im Zwischenraum (14; 34) eine Spiralfeder angeordnet ist, die vorzugsweise aus spiralförmig gewickeltem Flachmaterial besteht.

5. Verbindung nach Anspruch 4, dadurch gekennzeichnet, daß als Spiralfeder (15; 35) der Mantel eines handelsüblichen Bowdenzuges verwendet wird.

6. Verbindung nach einem oder mehreren der vorhergehenden Ansprüche 1 bis 5, dadurch gekennzeichnet, daß die Spiralfeder (15; 35) durch Verwendung eines Klebers im Zwischenraum (14; 34) fixiert ist.

7. Verbindung nach einem oder mehreren der vorhergehenden Ansprüche 1 bis 6, dadurch gekennzeichnet, daß das Verbindungsstück des Werkstoffteils mit der größeren Wärmedehnung (4) innen und das Verbindungsstück des Werkstoffteils mit der geringeren Wärmedehnung (1) außen angeordnet ist.

8. Verbindung nach einem oder mehreren der vorhergehenden Ansprüche 1 bis 6, dadurch gekennzeichnet, daß das Verbindungsstück des Werkstoffteils mit der größeren Wärmedehnung (24) außen und das Verbindungsstück des Werkstoffteils mit der geringeren Wärmedehnung (21) innen angeordnet ist.

9. Verbindung nach einem oder mehreren der vorhergehenden Ansprüche 1 bis 8, dadurch gekennzeichnet, daß sie zwischen einem Pumpenlaufrad (1; 21) aus Siliciumcarbid und einer Antriebswelle (4; 24) aus Metall gebildet wird.

FIG. 1

FIG. 1

# FIG. 2

1

2

13

11

# FIG. 3

4

10

12

# FIG. 4

22

32

21

S

35

34

24

33

23